# EUROPÄISCHE PATENTANMELDUNG

(11) **EP 1 306 450 A1**
(43) Veröffentlichungstag der Anmeldung: **02.05.2003**
(21) Anmeldenummer: 02450240.3
(22) Anmeldetag: 21.10.2002
(51) Int. Cl.: C21B 3/08

(54) **Verfahren und Vorrichtung zum Granulieren und zerkleinern von flüssigen Schmelzen**

(30) Priorität: 23.10.2001 AT 16862001
(71) Anmelder: Tribovent Verfahrensentwicklung GmbH, 6700 Lorüns (AT)
(72) Erfinder: Edlinger, Alfred, Dipl.-Ing., 6780 Bartholomäberg (AT)
(74) Vertreter: Haffner, Thomas M., Dr.

(57) **Zusammenfassung**

Bei einem Verfahren zum Granulieren und Zerkleinern von flüssigen Schmelzen, insbesondere Schlacken oder Gläsern, bei welchem die Schmelze mit Dampf zerstäubt wird und in einen Kühlraum ausgestoßen wird und anschließend weiter zerkleinert wird, wird Dampf mit einer maximalen Temperatur von 650° C eingesetzt, wobei die Teilchen, insbesondere fadenförmige Partikel, bei Partikeltemperaturen unter 1050° C und über 600° C einer Vorzerkleinerung zugeführt und mit weiterem Dampf mit einer Temperatur unter 250° C quer zur Strahlrichtung beaufschlagt werden und anschließend bei Partikeltemperaturen unter 650° C einer weiteren Zerkleinerung in einer Wirbelschicht zugeführt werden. In die Wirbelschicht tauchen mit einem Kühlmedium gekühlte konvektive Kühlflächen ein.

## Beschreibung

Die Erfindung bezieht sich auf ein Verfahren zum Granulieren und Zerkleinern von flüssigen Schmelzen, insbesondere Schlacken oder Gläsern, bei welchem die Schmelze mit Dampf zerstäubt wird und in einen Kühlraum ausgestoßen wird und anschließend weiter zerkleinert wird sowie auf eine Vorrichtung zur Durchführung dieses Verfahrens mit einem Schmelzentundish, einer Dampflanze, einem Kühlraum mit Strahlungskühlflächen und Düsen zum Beaufschlagen des Sprühstrahls mit Dampf.

Zum Granulieren und Zerkleinern von flüssigen Schlacken sind bereits Verfahren bekannt geworden, bei welchen Druckwasser oder Dampfstrahlen gegen einen Schlackenstrahl gerichtet wurden. In der WO 95/15402 wurde beispielsweise die Schmelze in eine Mischkammer unter Druck eingebracht und in die Mischkammer Druckwasserdampf oder Wasserdampfgemische eingedüst. Durch die rasche Expansion wird bei diesem Verfahren ein Druck aufgebaut, der über einen Diffusor zum Ausstoß der erstarrten Partikel führt, wobei die kinetische Energie der Teilchen zur Zerkleinerung genützt werden kann. Bei dem Verfahren nach der SU 1 761 704 A1 wird ein Dampfstrahl gegen einen freifließenden Schlackenstrahl gerichtet, wobei eine definierte Strahlgeschwindigkeit für den Dampfstrahl eingehalten wird, sodass dadurch die Qualität des Granulats verbessert werden kann. Weitere Verfahren dieser Art sind beispielsweise in der SU 903 328 A, in der DE 32 40 142 A1, in der DE 39 19 155 A1 und der DE 43 27 124 C2 beschrieben.

Zum Granulieren und Zerkleinern von flüssigen Schlacken wurde auch bereits vorgeschlagen, diese mit Dampf oder Treibgas in Granulierräume auszustoßen, wobei in der Folge eine weitere Zerkleinerung in Strahlenmühlen unter Verwendung von Treibgasstrahlen erfolgte. Ein derartiges Verfahren ist beispielsweise aus der WO 99/42623 bekannt. Schlacken fallen üblicherweise bei Temperaturen zwischen 1400° C und 1600° C an, und aufgrund der relativ hohen Temperaturdifferenz zwischen dem Treibgasstrahl und der flüssigen Schlacke besteht bei derartigen Verfahren die Gefahr der Ausbildung mehr oder minder großer Agglomerate sowie die Gefahr einer Fadenbildung, welche in der Folge den Zerkleinerungsaufwand erhöht und die Abkühlgeschwindigkeit empfindlich verringert. Vorrangig wurde bei allen Vorschlägen bisher eine möglichst rasche Abkühlung der Schlacken angestrebt, wobei dies naturgemäß durch Agglomeratbildung und Fadenbildung beeinträchtigt werden kann.

Es wurde weiters bereits vorgeschlagen, die flüssige Schlacke mit Verbrennungsabgasen in einen Granulierraum auszustoßen, um die Gefahr eines Verlegens der Schlackenaustrittsöffnung aus dem Schlackentundish durch erstarrende Schlacke zu reduzieren. Bei derartigen Verfahren gelangen die in den Granulierraum eingestoßenen Schlackenpartikel mit wesentlich höherer Temperatur in eine nachgeschaltete Kühlzone, wobei die höheren Temperaturen eine geringere Schlackenviskosität und eine Verringerung der Oberflächenspannung der Schlackentröpfchen zur Folge haben, sodass eine feinere Zerteilung der Schlackentröpfchen beim Eintreten in die Kühlzone erzielt werden kann. Die feine Dispersion von Schlackentröpfchen führt dabei zu entsprechend kleinen Tröpfchen mit relativ hoher spezifischer Oberfläche, sodass die Abkühlung in kleinbauenden Kühlkammern erreicht werden kann.

Insgesamt wurde bei den bekannten Vorschlägen jeweils Fluid unter Druck zum Ausstoßen von flüssigen Schlacken aus einem Schlackentundish in eine nachgeschaltete Granulierkammer herangezogen, sodass insbesondere beim Einsatz von Dampf als Treibmedium eine entsprechende Dampferzeugung zur Herstellung des Hochdruckdampfes der Einstoßöffnung vorgeschaltet werden musste.

Die Erfindung zielt nun darauf ab, ein Verfahren der eingangs genannten Art dahingehend weiterzubilden, dass der Energieaufwand für die Granulation und die Zerkleinerung wesentlich herabgesetzt wird und gleichzeitig bei überaus hoher Mahlfeinheit eine entsprechend große Kornbandverteilung bzw. Kornbreite gewährleistet ist, um das granulierte und zerkleinerte Produkt als Zuschlagsstoff für Zement oder bei entsprechender Zusammensetzung der Schlacken als Ersatz für Zement einsetzen zu können. Insbesondere eine grobe Kornbandverteilung, wie sie im Fall homogener Mahlverfahren nicht ohne weiteres erzielt werden kann, erlaubt in der Folge, das Wasser-Zement-Verhältnis abzusenken und damit eine schnellere Festigkeitsentwicklung zu erzielen.Zur Lösung dieser Aufgabe besteht das erfindungsgemäße Verfahren im wesentlichen darin, dass Dampf mit einer maximalen Temperatur von 650° C eingesetzt wird und dass die Teilchen, insbesondere fadenförmigen Partikel, bei Partikeltemperaturen unter 1050° C und über 600° C einer Vorzerkleinerung zugeführt und mit weiterem Dampf mit einer Temperatur unter 250° C quer zur Strahlrichtung beaufschlagt werden und anschließend bei Partikeltemperaturen unter 650° C einer weiteren Zerkleinerung in einer Wirbelschicht zugeführt werden, wobei in die Wirbelschicht mit einem Kühlmedium gekühlte konvektive Kühlflächen eintauchen. Dadurch, dass nun abweichend von den bisherigen Verfahren mit relativ geringen Dampftemperaturen von unter 650° C gearbeitet wird, gelingt es, den Aufwand für die Dampferzeugung wesentlich zu reduzieren und die Energiebilanz bereits wesentlich zu verbessern. Mit einer derartig tiefen Dampftemperatur wird aber nun, wie bereits eingangs erwähnt, die Agglomerat- und Fadenbildung begünstigt, welche bei den bisherigen Verfahren durch Wahl entsprechend höherer Temperaturen verhindert werden sollte. Überraschenderweise hat sich nun gezeigt, dass diese bisher als unerwünscht dargestellte Fadenbildung energetisch bedeutende Vorteile bei der nachfolgenden Zerkleinerung mit sich bringt, wenn definierte Parameter eingehalten werden. Gleichzeitig erlaubt eine derartige Fadenbildung bei Unterteilung der nachfolgenden Zerkleinerung in eine Vorzerkleinerung und eine weitergehende Zerkleinerung die Einstellung einer entsprechend hohen Kornbreite bei überaus hoher Mahlfeinheit in der nachfolgenden Feinzerkleinerung. Bei Einsatz des erfindungsgemäß gewählten Kaltdampfes bei Temperaturen unter 650° C ist die Fadenlänge in hohem Maße eine Funktion der Dampftemperatur. Bei relativ niederer Dampftemperatur lassen sich Fadenlängen bis zu 850 µm erzielen, wobei bei etwas 650° C immer noch Längen von etwa 150 µm beobachtet werden. Der Fadendurchmesser ist wiederum eine Funktion des Dampfdruckes, wobei bei 5 bar ein Fadendurchmesser von etwa 25 µm beobachtet wurde, und bei 25 bar ein Fadendurchmesser von etwa 5 µm. Durch die Wahl der Obergrenze für die Dampftemperatur von 650° C kann in dem genannten Druckbereich von 5 bis 25 bar gearbeitet werden, und es kann auf aufwändige Dampfüberhitzungsaggregate verzichtet werden und konventionelle Technologie verwendet werden. Dadurch, dass nun die insbesondere fadenförmigen Partikel bei Temperaturen zwischen etwa 600° C und 1050° C einer Vorzerkleinerung zugeführt werden, bei welcher weiterer Dampf in dem angeführten Temperaturbereich, d. h. unter 250° C quer zur Strahlrichtung gegen den Partikelstrom gerichtet wird, kann in einfacher Weise eine entsprechende Vorzerkleinerung vorgenommen werden, welche zu einer hohen Kornbreite und damit zu einer besonders großen Kornbandverteilung führt, wobei in diesem Bereich der Vorzerkleinerung eine entsprechende Kühlung erfolgt, da diese in einem Kühlraum erfolgt. Die effiziente Vorzerkleinerung beruht auf dem thermischen Schock der erstarrten, spröden, glasartigen Fäden, welche unmittelbar zerbrechen, ohne dass hohe kinetische Energie erforderlich wäre. Dadurch, dass nun die fadenförmigen Partikel nach der Vorzerkleinerung bei Partikeltemperaturen unter 650° C einer gesonderten weiteren Zerkleinerung in einer Wirbelschicht zugeführt werden, gelingt es nun, die überaus zerbrechlichen Fadenstrukturen mit geringstem Energieaufwand weiter zu zerkleinern, sodass sich Mahlfeinheiten von bis zu 12000 Blaine ergeben, ohne dass hierfür aufwändige Mühlen, mit welchen derartige Mahlfeinheiten im übrigen nicht ohne weiteres erzielbar wären, eingesetzt werden müssen. Es wird somit der optimale Temperaturbereich unterhalb der Erweichungstemperatur gewählt, bei welcher die Partikel bevorzugt bei nur geringem Energieeintrag durch Kollision miteinander zu kleinsten Teilchen zerbrechen, sodass die Energiebilanz weiter wesentlich verbessert wird. Die erfindungsgemäße Verfahrensweise erlaubt es dabei, weitestgehend energieautonom zu arbeiten, da extreme Heißdampftemperaturen nicht mehr erforderlich sind, und daher Überhitzungsaggregate wie beispielsweise Pebbleheater nicht mehr zum Einsatz gelangen müssen. Der Treibdampf wird gleichzeitig gezielt als Kühlmedium genutzt und die Mikrofasern mit überaus geringem spezifischen Energieaufwand zerbrochen.

In besonders vorteilhafter Weise wird das erfindungsgemäße Verfahren hierbei so durchgeführt, dass die zerstäubten Teilchen bei Temperaturen zwischen 350° C und 600° C der weiteren Zerkleinerung zugeführt werden, wodurch sich eine besonders hohe Zerkleinerungswirkung mit hoher Mahlfeinheit ergibt.

Während bei Temperaturen über 650° C die Wärme in energetisch sinnvoller Weise über Strahlungskühlflächen abgeführt wird, wird in der nachfolgenden Feinzerkleinerung eine konvektive Kühlung vorgenommen, wobei in die Wirbelschicht mit einem Kühlmedium gekühlte konvektive Kühlflächen eintauchen. Diese konvektive Kühlung ist bei Temperaturen unter 650° C wesentlich effizienter, sodass auch hier in der Gesamtheit gesehen mit relativ kleinbauenden Einrichtungen ein Optimum an Effizienz erreicht werden kann.

Bevorzugt wird im Rahmen des erfindungsgemäßen Verfahrens so vorgegangen, dass in die konvektiven Kühlflächen der weiteren Zerkleinerungseinrichtung Wasser mit einem Druck von 5 bis 25 bar eingespeist wird. Durch Wahl dieses Druckbereiches kann innerhalb der Gesamtanlage eine vollständige Rezirkulation von Kondensat- und Dampfphasen an den geeigneten Stellen vorgenommen werden, wobei mit Vorteil das Verfahren so durchgeführt wird, dass der Kühlraum für die Vorzerkleinerung mit einem Strahlungskühlmantel ausgebildet ist, welcher mit dem Heißwasser bzw. Dampf aus den konvektiven Kühlflächen der weiteren Zerkleinerungseinrichtung gespeist wird. Die konvektiven Kühlflächen führen zu einer Erwärmung des Speisewassers in diesen Kühlflächen auf Temperaturen von 152 bis 224° C im Druckbereich von 5 bis 25 bar und ein aus derartigen konvektiven Kühlflächen abgezogenes Heißwasser bzw. Dampf kann in einer Dampftrommel gesammelt werden, aus welcher das Heißwasser wiederum den Strahlungskühlflächen zugeführt wird. Innerhalb der Strahlungskühlflächen wird das Heißwasser weiter verdampft und kann beispielsweise bei Temperaturen von etwa 400° C wiederum im Druckbereich von 5 bis 25 bar abgezogen werden und eignet sich daher prinzipiell zum Eindüsen in die flüssige Schmelze zum Zweck der nachfolgenden Zerstäubung. Der aus den Strahlungskühlflächen abgezogene Dampf kann ggf. auf Temperaturen bis etwa 650° C nachüberhitzt werden, wobei auch hier im Druckbereich von 5 bis 25 bar gearbeitet werden kann. Der relativ kalte Dampf, welcher nach dem Austritt aus den Konvektionskühlflächen im Temperaturbereich zwischen 152 bis 224° C vorliegt, kann unmittelbar zur Vorzerkleinerung eingesetzt werden und dient gleichzeitig der weiteren Kühlung der Partikel im Kühlraum.

Da insgesamt bei vergleichsweise niederen Temperaturen gearbeitet wird, besteht naturgemäß die Gefahr eines Erstarrens der Schmelze im Bereich des Tundishbodens bzw. des Tundishablaufes und es ist daher bevorzugt im Rahmen des erfindungsgemäßen Verfahrens vorgesehen, dass der Zerstäubungskopf über Brenner beheizt wird, wobei die heißen Verbrennungsabgase in erster Linie die Kontaktflächen der Bodendüse laminar umspülen und auf diese Weise ein Zuwachsen der Auslassöffnung des Tundish verhindern.

Mit Vorteil wird zur Vermeidung einer hohen Druckbelastung und der Gefahr der Ausbildung von Ablagerungen im Bereich der Strahlungskühlflächen so vorgegangen, dass der Strahlungskühlmantel mit einem drucklosen Wärmeträgerfluid gespeist ist, welches über einen Wärmetauscher zur Dampferzeugung geführt ist. Als Wärmeträgerfluid kommt hiebei ein organisches oder anorganisches Fluid bzw. Öl in Betracht. In einem nachgeschalteten Wärmetauscher kann auf diese Weise Sattdampf erzeugt und gegebenenfalls überhitzt werden.

Die erfindungsgemäße Vorrichtung mit einem Schmelzentundish, einer Dampflanze, einem Kühlraum mit Strahlungskühlflächen und Düsen zum Beaufschlagen des Sprühstrahls mit Dampf ist bevorzugt so ausgebildet, dass dem Kühlraum ein Nachzerkleinerungsaggregat nachgeschaltet ist, an dessen Boden Düsen zum Einstoßen von Dampf und/oder Luft zur Ausbildung einer Wirbelschicht angeordnet sind, im welchem von Wasser durchströmte konvektive Kühlflächen im Bereich der Wirbelschicht angeordnet sind und an welchem ein Sichter zum Austrag von Feingut aus der Wirbelschicht angeschlossen ist. Der in die Bodendüsen des Nachzerkleinerungsaggregats eingetragene Dampf und/oder Luft kann hierbei zusätzlich mit Wasser versetzt werden, sodass ein relativ nasser Dampf mit etwa 40 % Feuchtigkeit ausgebildet werden kann. Der Luftzusatz erfolgt zur Anhebung des Taupunktes in nachfolgenden Aggregaten um eine vorzeitige Kondensation zu verhindern. Zu diesem Zweck kann in den Raum unter die Bodendüse auch Speisewasser aus dem Kondensat der zuvor bereits beschriebenen Dampftrommel eingespeist werden, sodass hier eine weitestgehende Kreislaufführung gelingt. Über den Sichter wird hierbei Feingut mit Dampf ausgetragen, wobei über die konvektiven Kühlflächen im Bereich der Wirbelschicht eine entsprechende Überhitzung des Wassers und eine entsprechende Dampfbildung innerhalb der Anlage gelingt.

Mit Vorteil ist die erfindungsgemäße Vorrichtung dahingehend weitergebildet, dass die Ableitung des Speisewassers der konvektiven Kühlflächen mit einer Dampftrommel verbunden ist, aus welcher eine Wasserleitung mit den Strahlungskühlflächen des Kühlraums verbunden ist und eine Dampfleitung mit den Düsen für die Beaufschlagung des Sprühstrahls verbunden ist, sodass Kondensat innerhalb der Anlage unmittelbar zur Kühlung im Kühlraum herangezogen wird, wobei das die Strahlungskühlflächen verlassende Medium entsprechend überhitzt ist und unmittelbar als Treibdampf für die Beaufschlagung des Sprühstrahles Verwendung finden kann.

Zusätzlich kann mit Vorteil die Ausbildung so getroffen sein, dass mit der Dampftrommel eine weitere Leitung für die Rückführung von kondensiertem Wasser in die weitere Zerkleinerungseinrichtung verbunden ist, um, wie bereits zuvor erwähnt, eine entsprechende Anreicherung an Wasser im Dampf zu gewährleisten, wodurch sich besonders günstige Produkteigenschaften ergeben.

Das die Strahlungskühlflächen verlassende dampfförmige Medium, das in der Regel bei Temperaturen von etwa 400° C im Druckbereich zwischen 5 und 25 bar vorliegt, kann entweder unmittelbar der Sprühdüse zugeführt werden oder aber, wie es einer bevorzugten Ausbildung der erfindungsgemäßen Vorrichtung entspricht, unter Zwischenschaltung eines Wärmetauschers zur Nacherhitzung mit der Dampflanze zum Zerstäuben der Schmelze verbunden sein.

Mit Rücksicht auf den Umstand, dass im Rahmen des erfindungsgemäßen Verfahrens bewusst die Fadenbildung für die nachfolgende Ausbildung einer hohen Kornbreite bzw. einer groben Kornbandverteilung und die entsprechend feine Nachzerkleinerung begünstigt wird, lassen sich im Rahmen des erfindungsgemäßen Verfahrens und mit der erfindungsgemäßen Vorrichtung nunmehr auch Schlacken mit Basizitäten verarbeiten, welche mit konventionellen Verfahren nicht ohne weiteres verarbeitet werden konnten, da sie einen zu hohen Faseranteil zur Folge gehabt hätten. Im Rahmen des erfindungsgemäßen Verfahrens lassen sich nunmehr Schlacken mit Basizitäten zwischen 0,6 und 1,6 wirtschaftlich verarbeiten und mit geringstem Energieaufwand zerkleinern. Der Treibstrahl für den Ausstoß der flüssigen Schmelze kann als unterexpandierter Strahl ausgebracht werden. Gegebenenfalls können als Düsen Lavaldüsen eingesetzt werden. Durch die vorgesehene Abschlämmung der Dampftrommel in den Kühlbereich wird insgesamt ein nahezu abwasserfreies Verfahren verwirklicht und ein hohes Maß an Energieautonomie erreicht. Zur Abtrennung des Feingutes vom ausgetragenen Dampf genügt es, den Nassdampf zu kondensieren, sodass unmittelbar relativ heißes Wasser gebildet wird, welches mit geringem energetischen Aufwand neuerlich verdampft werden kann, um die entsprechenden Dampfmengen bereitzustellen. Von besonderer Wichtigkeit ist hier, dass Zementstaub nur mit überhitztem Dampf bzw. Dampf/Luftgemischen bei vom Taupunkt verschiedenen Temperaturen in Kontakt stehen soll, um eine Hydratation des Zementstaubes zu verhindern.

Die Dampfstrahlen in der Vorzerkleinerungsstufe können nach Art einer Gegenstrahlmühle auf einen gemeinsamen Mahlpunkt gerichtet sein. Da es im Rahmen dieser Vorzerkleinerung aber nicht darum geht, ein hohes Maß an Zerkleinerungsleistung sicherzustellen, sondern in erster Linie darum geht, die entsprechend hohe Kornbreite sicherzustellen, genügt es, die Dampfstrahlen tangential und ggf. mit einer Abwärtsneigung auf den herabfallenden Sprühstrahl zu richten, sodass die Fasern in den Mahlstrahl eingesaugt werden und gleichzeitig eine entsprechende Kompaktierung verhindert bzw. Kornbandverteilung erzielt wird.

Die Beheizung des Tundishauslaufes erfolgt mit Vorteil über Porenbrenner, welche zu einer Laminarströmung der heißen Gase entlang des Randes der Tundishauslassöffnung führen und dadurch ein Zuwachsen der Öffnung durch Einfrieren der Schlacke verhindern. Für diesen Zweck sind sehr geringe Heißgasmengen erforderlich.

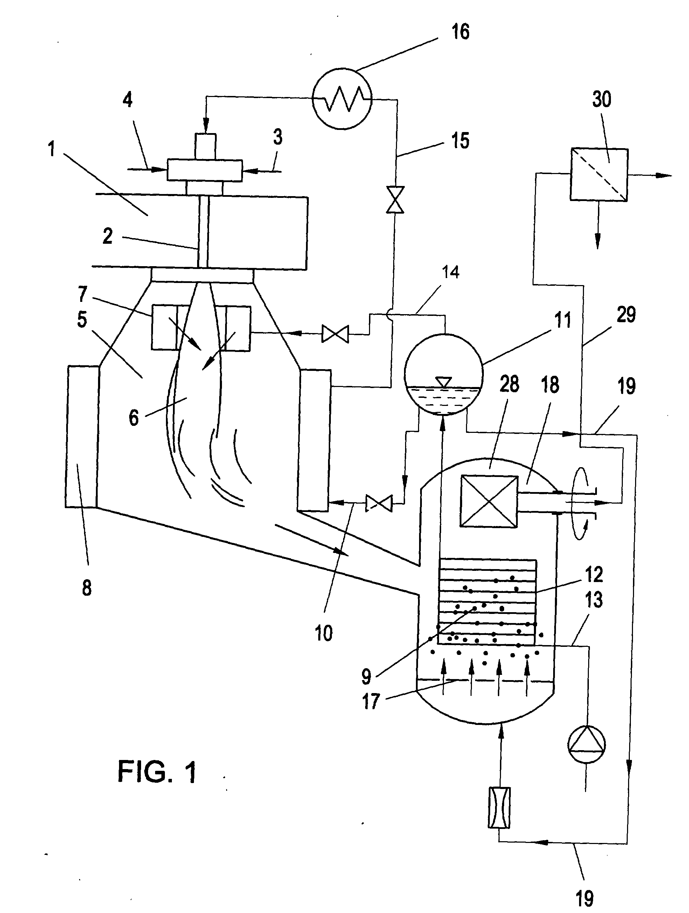

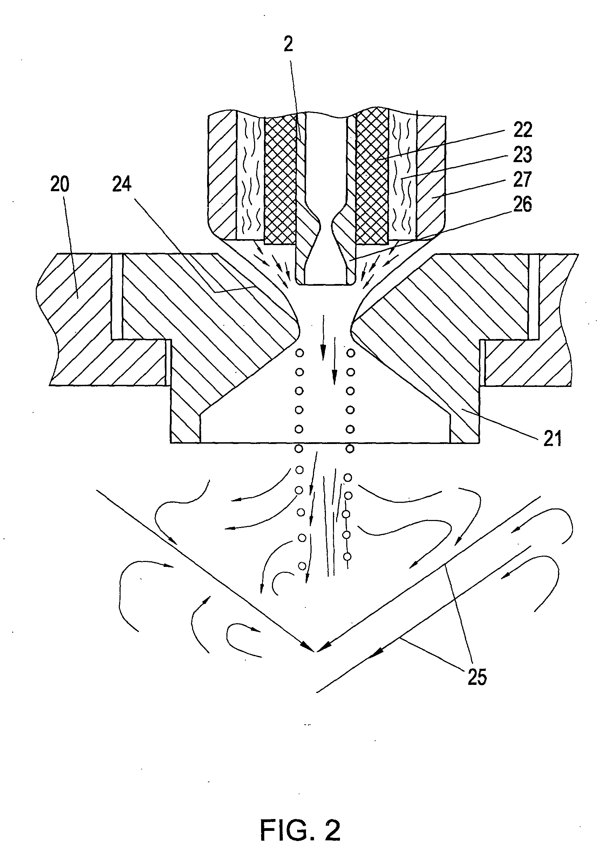

Die Erfindung wird nachfolgend anhand von in der Zeichnung dargestellten Ausführungsbeispielen näher erläutert. In dieser zeigen Fig.1 einen schematischen Aufbau einer erfindungsgemäßen Vorrichtung und Fig.2 ein Detail des Tundishauslaufes mit der in diesem Bereich vorgesehenen Beheizung.

In Fig.1 ist mit 1 ein Schlackentundish bezeichnet, in welchen. eine Lanze 2 für Treibdampf mündet. Konzentrisch zur Lanze sind Zuführungen 3 für Brennstoff zu den Porenbrennern und Zuführungen 4 für Verbrennungsluft angeordnet. Der den Tundish verlassende zerstäubte Schlackenstrahl tritt in einen Kühlraum 5 aus, wobei unmittelbar nach dem Erstarren der Teilchen bei Temperaturen zwischen 950 und 1100° C den Strahl 6 koaxial umgebende Dampfdüsen 7 angeordnet sind, über welche dem Stahl entweder ein Drall verliehen wird, wodurch durch Kollision der Partikel eine Vorzerkleinerung oder aber bereits ein erstes Mahlen nach Art einer Gegenstrahlmühle erfolgt. Mit Rücksicht auf die plastischen Eigenschaften der Partikel lässt sich aber in diesem Bereich keine hohe Zerkleinerungsleistung erzielen, wohl aber eine entsprechende Verbreiterung der Kornbandverteilung und damit eine relativ grobe Kornbandverteilung einstellen. In dem von Strahlungskühlflächen 8 umgebenen Kühlraum 5 erfolgt eine Abkühlung der Partikel auf Temperaturen von etwa 650° C, worauf der vorzerkleinerte Partikelstrom in ein Fließbett 9 gelangt, in welchem eine weitere Zerkleinerung durch Kollision der Teilchen miteinander in einem Temperaturbereich erfolgt, bei welchem faseriges Material besonders brüchig und daher leicht zerkleinerbar ist. Die Kühlflächen 8 sind hierbei mit Heißwasser versorgt, welches über die Leitung 10 aus einer Dampftrommel 11 abgezogen wird und in dieser Dampftrommel als Kondenswasser vorliegt.

Im Bereich des Fließbettes 9 sind konvektive Kühlflächen 12 eintauchend angeordnet, welche mit Speisewasser über eine Leitung 13 versorgt werden. Auch dieses Speisewasser kann aus dem Kondenswasser der Dampftrommel 11 bezogen werden, wobei im Bereich der konvektiven Kühlflächen 12 eine entsprechende Überhitzung dieses Speisewassers erfolgt. Insgesamt liegt in der Dampftrommel flüssiges und gasförmiges Medium im Temperaturbereich zwischen 152 und 224° C vor, wobei ein Druck zwischen 5 und 25 bar gewählt wird. Der Dampf dieser Dampftrommel kann über die Leitung 14 den Düsen 7 in der Kühlkammer 5 zugeführt werden. Der aus den Strahlungskühlflächen 8 abgezogene Dampf gelangt über die Leitung 15 und ggf. über einen rekuperativen Nacherhitzer 16 zur Dampflanze 2 und bewirkt die Zerstäubung der flüssigen. Schmelze. Über die Leitung 15 wird hierbei Dampf mit einer Temperatur von etwa 400° C im Druckbereich zwischen 5 und 25 bar abgezogen, wobei in den rekuperativen Überhitzer 16 eine Nachüberhitzung auf etwa 650° C vorgenommen wird.

Zur Ausbildung der Wirbelschicht in. der Nachzerkleinerungsstufe ist ein Düsenboden 17 in der Nachzerkleinerungsstufe 18 vorgesehen, über welchen Nassdampf in die Wirbelschicht 9 eingebracht wird. Zusätzlich kann hierbei über die Leitung 19 Kondensat aus der Dampftrommel 11 zur Erzielung entsprechend hoher Feuchtigkeitsgehalte im Nassdampf oder Dampf/Luftgemisch eingesprüht werden.

In Fig.2 ist der Tundishboden mit 20 bezeichnet und die Auslassdüse bzw. der Sprühkopf 21 vergrößert dargestellt. Die Dampflanze 2 weist hier eine Lavaldüse 26 auf und wird von einem Isolator 22 und einem Wehrrohr 27 umgeben. Konzentrisch zur Dampflanze ist ein Porenbrenner 23 vorgesehen, dessen Heißgase laminar über den längs der Wand 24 des Tundishauslaufes ablaufenden Schmelzefilm strömen und auf diese Weise ein Zufrieren verhindern. Mit 25 sind schematisch die Sprühstrahlen der Düsen 7 angedeutet, welche zu einer entsprechenden Verwirbelung der Partikel und damit zur Ausbildung der gewünschten Korngrößenverteilung genutzt werden. Die Lavaldüse 26 der Lanze 2 kann bis zu 30 % unterexpandiert betrieben werden, wodurch sich eine besonders günstige Zerstäubung bei geringem Dampfdruck ergibt.

In Fig. 1 ist der Staubaustrag im Anschluss an einen Sichter 28 durch eine Leitung 29 angedeutet, wobei die Staubpartikel im Filter 30 abgefangen werden bevor der Dampf kondensiert wird.

## Patentansprüche

1. Verfahren zum Granulieren und Zerkleinern von flüssigen Schmelzen, insbesondere Schlacken oder Gläsern, bei welchem die Schmelze mit Dampf zerstäubt wird und in einen Kühlraum ausgestoßen wird und anschließend weiter zerkleinert wird, **dadurch gekennzeichnet, dass** Dampf mit einer maximalen Temperatur von 650° C eingesetzt wird und dass die Teilchen, insbesondere fadenförmige Partikel, bei Partikeltemperaturen unter 1050° C und über 600° C einer Vorzerkleinerung zugeführt und mit weiterem Dampf mit einer Temperatur unter 250° C quer zur Strahlrichtung beaufschlagt werden und anschließend bei Partikeltemperaturen unter 650° C einer weiteren Zerkleinerung in einer Wirbelschicht zugeführt werden, wobei in die Wirbelschicht mit einem Kühlmedium gekühlte konvektive Kühlflächen eintauchen.

2. Verfahren nach Anspruch 1, **dadurch gekennzeichnet, dass** die zerstäubten Teilchen bei Temperaturen zwischen 350° C und 600° C der weiteren Zerkleinerung zugeführt werden.

3. Verfahren nach Anspruch 1 oder 2, **dadurch gekennzeichnet, dass** in die konvektiven Kühlflächen der weiteren Zerkleinerungseinrichtung Wasser mit einem Druck von 5 bis 25 bar eingespeist wird.

4. Verfahren nach Anspruch 1, 2 oder 3, **dadurch gekennzeichnet, dass** der Zerstäubungskopf über Brenner beheizt wird.

5. Verfahren nach einem der Ansprüche 1 bis 4, **dadurch gekennzeichnet, dass** der Kühlraum für die Vorzerkleinerung mit einem Strahlungskühlmantel ausgebildet ist, welcher mit dem Heißwasser bzw. Dampf aus den konvektiven Kühlflächen der weiteren Zerkleinerungseinrichtung gespeist wird.

6. Verfahren nach einem der Ansprüche 1 bis 5, **dadurch gekennzeichnet, dass** der aus dem Strahlungskühlmantel der Vorzerkleinerung abgezogene Dampf zum Eindüsen der Schmelze eingesetzt wird.

7. Verfahren nach einem der Ansprüche 1 bis 6, **dadurch gekennzeichnet, dass** der Strahlungskühlmantel mit einem drucklosen Wärmeträgerfluid gespeist ist, welches über einen Wärmetauscher zur Dampferzeugung geführt ist.

8. Vorrichtung zur Durchführung des Verfahrens nach einem der Ansprüche 1 bis 7 mit einem Schmelzentundish, einer Dampflanze (2), einem Kühlraum (5) mit Strahlungskühlflächen (8) und Düsen (7) zum Beaufschlagen des Sprühstrahls (6) mit Dampf, **dadurch gekennzeichnet, dass** dem Kühlraum (5) ein Nachzerkleinerungsaggregat (18) nachgeschaltet ist, an dessen Boden Düsen (17) zum Einstoßen von Dampf zur Ausbildung einer Wirbelschicht (9) angeordnet sind, im welchem von Wasser durchströmte konvektive Kühlflächen (12) im Bereich der Wirbelschicht (9) angeordnet sind und an welchem ein Sichter (18) zum Austrag von Feingut aus der Wirbelschicht (9) angeschlossen ist.

9. Vorrichtung nach Anspruch 8, **dadurch gekennzeichnet, dass** die Ableitung des Speisewassers der konvektiven Kühlflächen (12) mit einer Dampftrommel (11) verbunden ist, aus welcher eine Wasserleitung (10) mit den Strahlungskühlflächen (8) des Kühlraums (5) verbunden ist und eine Dampfleitung (14) mit den Düsen (7) für die Beaufschlagung des Sprühstrahls (6) verbunden ist.

10. Vorrichtung nach Anspruch 8 oder 9, **dadurch gekennzeichnet, dass** mit der Dampftrommel (11) eine weitere Leitung (19) für die Rückführung von kondensiertem Wasser in die weitere Zerkleinerungseinrichtung (18) verbunden ist.

11. Vorrichtung nach Anspruch 8, 9 oder 10, **dadurch gekennzeichnet, dass** die Ableitung (15) aus den Strahlungskühlflächen (8), ggf. unter Zwischenschaltung eines Wärmetauschers (16) zur Nacherhitzung, mit der Dampflanze (2) zum Zerstäuben der Schmelze verbunden ist.
